# EUROPEAN PATENT SPECIFICATION

(11) **EP 4 357 050 B1**
(45) Date of publication and mention of the grant of the patent: **12.03.2025**
(21) Application number: 23198523.5
(22) Date of filing: 20.09.2023
(51) Int. Cl.: B22F 5/00, B33Y 70/00, C22C 1/04, C22C 19/05, B23K 26/342, B23P 6/00, B23K 9/04, B23K 101/00, B23K 103/18, B23K 26/00, B23K 9/167, B23K 9/173, B23K 9/23, B23K 35/02, B23K 35/30, B22F 7/06

(54) **HIGH GAMMA PRIME NICKEL BASED WELDING MATERIAL FOR REPAIR AND 3D ADDITIVE MANUFACTURING OF TURBINE ENGINE COMPONENTS**
NICKELBASIERTES SCHWEISSMATERIAL MIT HOHEM GAMMA-PRIME ZUR REPARATUR UND GENERATIVEN 3D-HERSTELLUNG VON TURBINENMOTORKOMPONENTEN
MATÉRIAU DE SOUDAGE À BASE DE NICKEL À HAUTE TENEUR EN GAMMA PRIME POUR LA RÉPARATION ET LA FABRICATION ADDITIVE 3D DE COMPOSANTS DE MOTEUR À TURBINE

(30) Priority: 17.10.2022 US 202217966965
(43) Date of publication of application: 24.04.2024
(73) Proprietor: Liburdi Engineering Limited, Dundas, Ontario L9H 7K4 (CA)
(72) Inventor: GONCHAROV, Alexander B., Dundas, Ontario, L9H 7K4 (CA); LOWDEN, Paul, Dundas, Ontario, L9H 7K4 (CA)
(74) Representative: Grund, Martin

(56) References cited:
- US-A1- 2017 100 804
- US-A1- 2021 130 932
- US-B2- 11 180 840

## Description

### FIELD

The specification relates to high gamma prime (y') nickel (Ni) based welding material for repair and 3D additive manufacturing of turbine engine components.

### BACKGROUND

The Ni-based superalloys are an important material in the field of gas-turbines and jet engines owing to the extraordinary combination of physical properties, tensile and creep strength, thermal fatigue, and oxidation resistance in the temperature range from 600° C (1112°F) to 1000° C (1830°F). Despite remarkable properties of superalloys, turbine blades exhibit tip degradation resulting mostly from thermal fatigue cracking, creep, oxidation and erosion. Therefore, turbine engine components undergo extensive weld repairs with the aim to reduce the cost of turbine engine overhaul. The 3D additive manufacturing (AM) similar, to a fusion welding, is relaying on weldability of materials as well. Unfortunately, commercially available high gamma prime (y') Rene 80 per US3,615,367 (R80); Rene 142 (R142) per US 3,615,376; Inconel 713 (IN713) per Aerospace Material Specification (AMS) 5391, Inconel 738 (IN738) per AMS5410, GTD111, and Mar M247 with chemical composition summarized in Table 1 containing more than 4.5 wt.% in total aluminum and titanium (Al + Ti) are considered non-weldable at ambient temperature due to extensive cracking (M.J. Donachie , S.J. Donachie, Superalloys: A Technical Guide , 2nd ed. ( ASM International ), Materials Park, OH , 2002 (further M.J. Donachie) and Joseph N. Ghoussoub et al "On the Influence of Alloy Composition on the Additive manufacturing of Ni-Based Superalloys", Metallurgical and Materials Transaction A, Published on Line on 08 January 2022, https://www.researchgate.net/publication/354983082 (further J. N. Ghoussoub)). Solidification and liquation cracking of high gamma prime (y') superalloys in 3D AM as per J.N. Ghoussoub was affiliated to a formation of intergranular and interdendritic low temperature Ta-Hf-Ni based eutectics. However, on other hand Ta and Hf free Inconel 713 and Rene 80 are prone to solidification and solid state cracking as well. Currently, only welding material as per the US11,180,840 ('840) containing 9.0 -10.5%Cr, 20-22%Co, 1.0-1.4%Mo, 5.0-5.8%W, 2.0-6.0%Ta, 3.0-6.5%Al, 0.2-0.5%Hf, 0.01-0.016%C, 1.5-3.5%Re, 0-1.0%Ge, 0-0.2%Y, 0-1.0%Si, 0-015%B demonstrated capabilities to produce crack free welds by laser welding (LBW) as well as 3D AM utilizing direct energy deposition (DED) and laser powder-bed fusion (L-PBF) processes at ambient tempeature. However, as it was found by experiments, due to poor controls of welding parameters and large size of a welding pool, which are typical for manual GTAW welding, GTAW welds were prone to a solidification cracking that makes unsuitable using GTAW welding for joining of subassemblies manufactured by 3D AM as well as for a repair of turbine engine components manufactured by 3D AM.

**Table 1. Typical Chemical Composition of Single Crystal and Some Welding Materials in wt. % with Nickel to Balance**

| **Material** | **IN713** | **IN738** | **M247** | **GTD111** | **R80** | **R142** | **US '840** |
|---|---|---|---|---|---|---|---|
| **Cr** | 13 | 16 | 8.1 | 14.3 | 14 | 6.8 | 10 |
| **Co** | - | 8.5 | 8.5 | 10.0 | 9.5 | 12 | 21 |
| **Mo** | 4.5 | 1.7 | 0.5 | 1.7 | 4 | 1.5 | 1.2 |
| **W** | - | 2.6 | 2 | 4.1 | 4 | 4.9 | 5.4 |
| **Ta** | - | 1.8 | 3.2 | 3.1 | - | 6.4 | 6 |
| **Al** | 6.0 | 3.4 | 5.6 | 3.2 | 3 | 6.1 | 5.5 |
| **Hf** | - | - | 1.4 | 0.08 | - | 1.5 | 1.5 |
| **Re** | - | - | - | - | - | 2.8 | 3 |
| **Ti** | 0.75 | 3.4 | 0.7 | 5.1 | 5 | - | - |
| **Zr** | 0.1 | 0.05 | 0.015 | 0.08 | - | 0.1 | - |
| **B** | 0.01 | 0.01 | 0.015 | 0.02 | - | 0.05 | 0.015 |
| **Other** | 2.3 Nb | 0.11 C | 0.17 C | 0.12 | 0.17 C | 0.12 C | ≤0.2 Y; 0.16 C; ≤1 Si |

| | | | | | | | |
|---|---|---|---|---|---|---|---|
| See M.J. Donachine for chemical composition of commercially available superalloys. | | | | | | | |

Therefore, in view of the above, there is a need in the art for a high gamma prime (y') nickel based welding material that improves on the properties of the high gamma prime (y') nickel based welding material, as disclosed in US Patent No. 11,180,840, to enable using GTAW-MA welding for repair and manufacturing of turbine engine components and other articles.

### SUMMARY OF THE SPECIFICATION

In one aspect, the specification discloses a high gamma prime (y') nickel based welding material for repair and 3D additive manufacturing of turbine engine components, the welding material containing by wt. %:
Chromium from 9.0 to 11.0 %,
Cobalt from 16.0 to 24.0 %,
Molybdenum from 1.0 to 1.4 %,
Tungsten from 5.0 to 5.8 %,
Tantalum from 1.5 to 1.9 %,
Aluminum from 4.5 to 5.5 %,
Rhenium from 1.5 to 2.5 %,
Iron from 0.2 to 0.8 %,
Hafnium from 0.1 to 0.3 %,
Boron from 0.005 to 0.02 %,
Carbon from 0.05 to 0.12 %, and
Nickel with impurities to balance.

### BRIEF DESCRIPTION OF THE DRAWINGS

Reference will now be made, by way of example, to the accompanying drawings which show example embodiments of the present application, and in which:
Figure 1 depicts the welded joint having (100) and (300) 3D AM materials produced by multilayer DED process using the powder manufactured from Alloy A and (200) GTAW-MA weld bead;
Figure 2 is the differential thermal analysis (DTA) traces depicting the solidification temperature of 1333°C and liquation temperature of 1382°C of Alloy B, wherein: (350) - the heating trace, (400) temperature pick corresponding melting of the material, (450) - the cooling trace, (500) - low temperature pick attributed to the solidification of interdendritic and intergranular eutectics during solidification of a welding pool, and (600) is the high temperature pick affiliated to the formation of the high temperature dendrites during solidification of a welding pool;
Figure 3 is the microstructure of the GTAW-MA weld bead on the 3D AM material, wherein: (a) Material manufactured by the DED process using Alloy B welding powder depicting the crack free centerline section of the GTAW-MA weld bead, and (b) the fusion line and heat affected zone (HAZ) between the (700) GTAW-MA weld and the (800) DED Alloy C material comprising the LBW welds of 1126 - 1307 µm (1.1 - 1.3 mm (0.043 - 0.051 inch)) in height; and
Figure 4 is the typical microstructure of the Alloy B GTAW-MA weld metal depicting (a) formation of dendritic structure during solidification of a welding pool, and (b) precipitation of gamma prime phase during a post weld aging heat treatment;
Figure 5 shows: (a) the fragment of the high temperature dendrites and Ta-Hf-Ni based interdendritic eutectics, and (b) Energy-dispersive X-ray (EDS) spectral analysis depicting the chemical composition of the interdendritic eutectics.

Similar reference numerals may have been used in different figures to denote similar components.

### DESCRIPTION OF EXAMPLE EMBODIMENTS

The specification discloses a high gamma prime (y') nickel based welding material (welding material), which is a further development of the superalloy as disclosed in US Patent No. 11,180,840. The welding material can be used a repair and 3D additive manufacturing (3D AM) of turbine engine components and other articles and subassemblies followed by a manual and automatic gas tungsten arc welding (GTAW) of subassemblies as well for laser beam (LBW), plasma (PAW), micro-plasma (MPW), and electron beam (EBW) fusion welding processes.

The inventors have found that a high gamma prime (y') nickel based welding material containing, by wt. %, from 9.0 to 11.0 % Cr, from 16.0 to 24.0 % Co, from 1.0 to 1.4 % Mo, from 5.0 to 5.8 % W, from 1.5 to 1.9 % Ta, from 4.5 to 5.5 % Al, from 0.1 to 0.3 % Hf, from 0.005 to 0.02 % B, from 0.05 to 0.12 % C, from 1.5 to 2.5 % Re, from 0.2 to 0.8 % Fe and nickel with impurities to balance, produced sound high strength welds utilizing GTAW-MA and automatic LBW welding.

In one embodiment, the specification relates to a high gamma prime (y') nickel based welding material containing, by wt. %, from 9.0 to 11.0 % Cr, from 16.0 to 18.0 % Co, from 1.0 to 1.4 % Mo, from 5.0 to 5.8 % W, from 1.5 to 1.6 % Ta, from 4.5 to 5.5 % Al, from 0.1 to 0.3 % Hf, from 0.005 to 0.02 % B, from 0.05 to 0.12 % C, from 1.5 to 2.5 % Re, from 0.2 to 0.8 % Fe and nickel with impurities.

In a second embodiment, the specification relates to a high gamma prime nickel based welding material containing, by wt. %, from 9.0 to 11.0 % Cr, from 19.0 to 21.0 % Co, from 1.0 to 1.4 % Mo, from 5.0 to 5.8 % W, from 1.6 to 1.7 % Ta, from 4.5 to 5.5 % Al, from 0.1 to 0.3 % Hf, from 0.005 to 0.02 % B, from 0.05 to 0.12 % C, from 1.5 to 2.5 % Re, from 0.2 to 0.8 % Fe and nickel with impurities to balance.

In a third embodiment, the specification relates to a high gamma prime (y') nickel based welding material containing, by wt. %, from 9.0 to 11.0 % Cr, from 22.0 to 24.0 % Co, from 1.0 to 1.4 % Mo, from 5.0 to 5.8 % W, from 1.8 to 1.9 % Ta, from 4.5 to 5.5 % Al, from 0.1 to 0.3 % Hf, from 0.005 to 0.02 % B, from 0.05 to 0.12 % C, from 1.5 to 2.5 % Re, from 0.2 to 0.8 % Fe and nickel with impurities to balance.

The embodiments disclosed herein can be a welding powder, a welding wire, an article manufactured by 3D additive manufacturing, or a repair section of a turbine engine component.

In addition, the high gamma prime (γ') nickel based welding material, disclosed herein, can be used for weld repair of turbine engine components, joining of subassemblies utilizing manual gas tungsten arc welding (GTAW-MA), for 3D additive manufacturing (3D AM), laser beam welding (LBW), plasma arc welding (PAW-ME), electron beam welding (EBW), or automatic gas tungsten arc (GTAW-ME) welding. Further, the welding material, disclosed herein, can be produced and supplied in the form of a welding powder, a welding rod, a welding wire utilizing commercially available equipment and technologies.

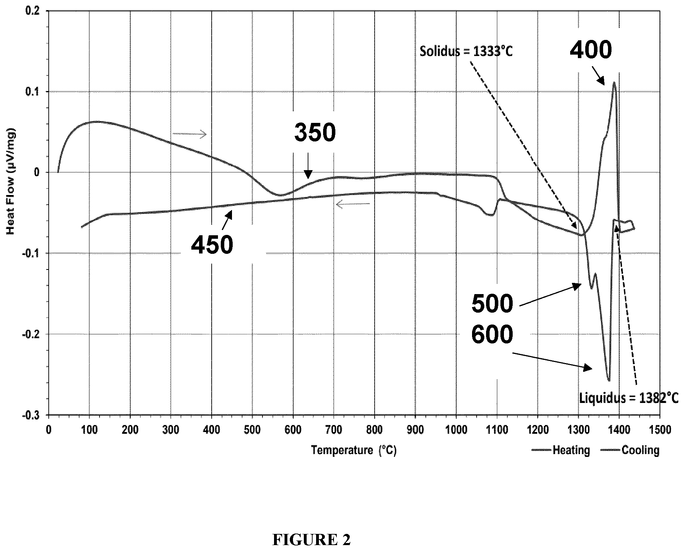

Based on experiments, it was determined that the welding material, disclosed herein, has the solidus temperature of 1333°C (2431.4°F) and the liquidus temperature of 1382°C (2519.6°F) as shown in the DTA traces in Figure 2.

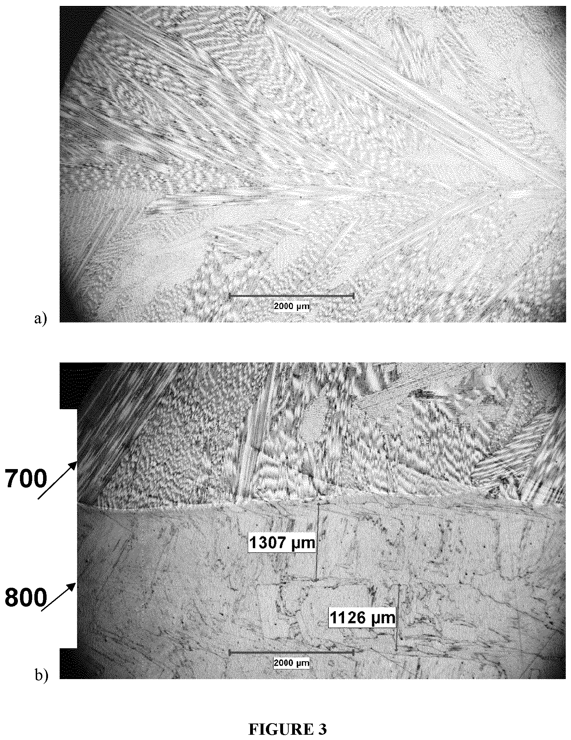

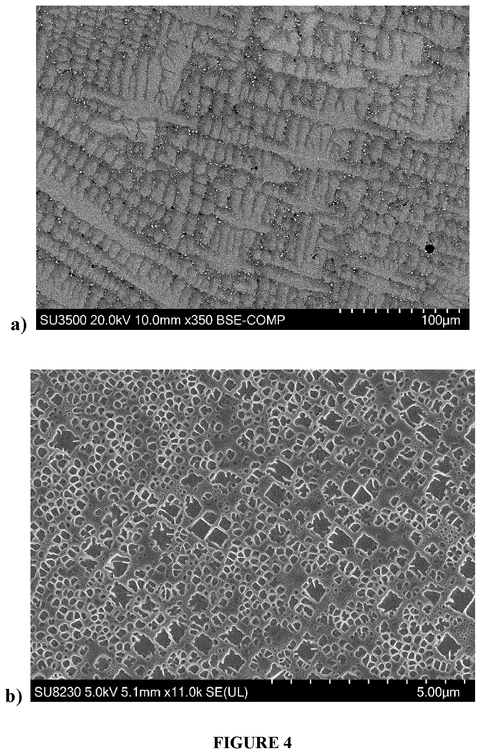

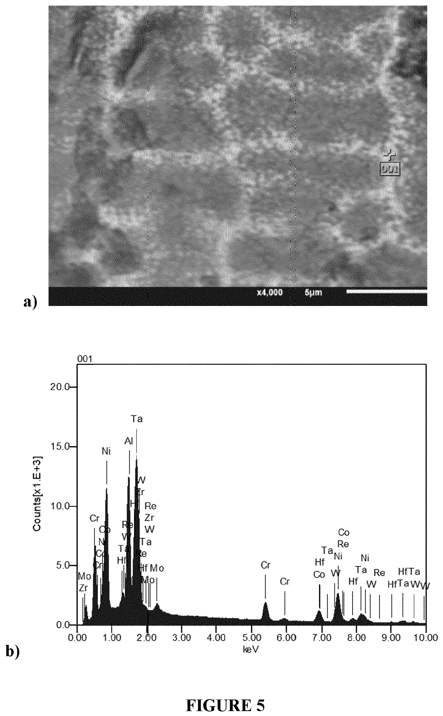

The double picks (500) and (600) on the cooling trace (450) shown in Figure 2 distinguish the welding material, disclosed herein, from other commercially available superalloys. The first large pick (600) at higher temperature correspond to the formation of the high temperature dendrites shown in Figure 3 and 4a, while the small pick (500) was resulted by a solidification of interdendritic eutectics. During solidification of a welding pool, dendrites formed the interconnected framework with sufficient strength and ductility to accommodate shrinkage and thermal stresses without cracking, while the unique fraction volume of eutectics, which was controlled by the Ta content in a conjunction with other alloying elements, was sufficient enough to fill up the interdendritic spaces forming defect free dens welds as shown in Figure 5. Interconnected frame work of high temperature dendrites was formed due to an epitaxial growth as shown in Figure 3. Therefore, sound welds were formed due to a precise balancing of Ta and Hf in conjunction with other alloying elements. Cobalt enabled increasing of Ta content from 1.5 wt.% to 1.9 wt.% without cracking of GTAW-MA welds. However, Co tended to reduce the high temperature tensile strength of the welding material, disclosed herein. Therefore, cobalt content was limited to 24 wt.% for turbine engine components exposed to a combination of high stresses and temperature above 1038°C (1900°F). Deviations of minimum and maximum content of alloying elements from those disclosed herein resulted in cracking of manual GTAW welds.

### EXAMPLES

Test samples were produced utilizing the 3D AM concept by the multilayer LBW using Alloy A per Claim 2, Alloy B per Claim 3, and Alloy C per Claim 4 powders of 45 µm in diameter, refer to Table 2.

**Table 2. The chemical composition of embodiments in wt.% with Ni to Balance**

| **Alloy** | **Cr** | **Co** | **Mo** | **W** | **Ta** | **Al** | **Hf** | **Re** | **Fe** | **B** | **C** |
|---|---|---|---|---|---|---|---|---|---|---|---|
| **A** | 9.0 | 16.0 | 1.0 | 5.0 | 1.5 | 4.5 | 0.1 | 1.5 | 0.2 | 0.005 | 0.05 |
| | 10.0 | 18.0 | 1.4 | 5.8 | 1.6 | 5.5 | 0.3 | 2.5 | 0.8 | 0.02 | 0.12 |
| **B** | 9.0 | 19.0 | 1.0 | 5.0 | 1.6 | 4.5 | 0.1 | 1.5 | 0.2 | 0.005 | 0.05 |
| | 10.0 | 21.0 | 1.4 | 5.8 | 1.7 | 5.5 | 0.3 | 2.5 | 0.8 | 0.02 | 0.12 |
| **C** | 9.0 | 22.0 | 1.0 | 5.0 | 1.8 | 4.5 | 0.1 | 1.5 | 0.2 | 0.005 | 0.05 |
| | 10.0 | 24.0 | 1.4 | 5.8 | 1.9 | 5.5 | 0.3 | 2.5 | 0.8 | 0.02 | 0.12 |

| | | | | | | | | | | | |
|---|---|---|---|---|---|---|---|---|---|---|---|
| *Note: the actual content of the each alloying element was not below the top value and above the bottom value.* | | | | | | | | | | | |

The test samples produced by 3D AM were subjected to GTAW-MA autogenous welding.

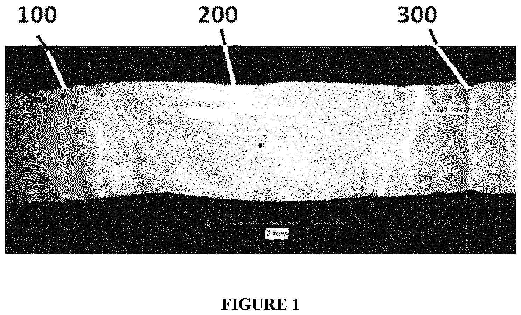

The LBW welding parameters included a laser head speed (welding speed) of 1.8 mm/s, a laser beam power of 415 W, a laser beam focus spot size of 950 µm, a powder feed rate of 4 g/min, and a laser head oscillation of 1.2 mm. After 3D AM samples of 2.6 - 2.8 mm in thickness samples were subjected to GTAW-MA with the argon backup using welding parameters selected by experiments following to the American Welding Society D17.1M:2017 AMD2 (AWS D17.1) specification for fusion welding aiming to produce full penetration as shown in Figure 1. After welding test samples were subjected to the post weld aging heat treatment (PWHT) comprising the primary aging at 1080°C (1976°F) for 4 hours followed by the secondary aging at 900°C (1652°F) for 4 hours, and 843°C (1550°F) for 16 hours.

All test samples were subjected to a non-destructive radiographic inspection to Group 1 acceptance standards as per AWS D17.1, metallographic examination of a cross sections shown in Figure 1, and examination of a top view of flat samples shown in Figure 3 aiming to reveal solidification features and defects if any.

In addition to above, GTAW-MA weld samples manufactured from Alloys A, B, and C were subjected to the tensile testing in transvers direction at temperatures of 20°C (68°F) as per the "American Society for Testing and Materials" (ASTM) E8 standard, 982°C (1800°F) and 1038°C (1900°F) as per ASTM E21 standard. The gage area of tensile samples included the weld metal produced by LBW and GTAW-MA weld. Non-destructive testing and metallographic examination of welded samples confirmed formation of sound crack free 3D AM materials produced by multilayer LBW (3D AM material) and the autogenous GTAW-MA weld produced by a manual welding.

**Table 3. Tensile Properties of GTAW-MA Welded Joints**

| **Material** | **Test Temp. °C (°F)** | **UTS, MPa (KSI)** | **0.2% Y.S, MPa (KSI)** | **Elongation, %** |
|---|---|---|---|---|
| **Alloy A** | 20 (68) | 1123.2 (162.9) | 846.7 (122.8) | 22.4 |
| | 982 (1800) | 398.5 (57.8) | 298.5 (43.3) | 14.1 |
| | 1038 (1900) | 279.2 (40.5) | 208.9 (30.3) | 14.7 |
| **Alloy B** | 20 (68) | 1043.2 (151.3) | 828.1 (120.1) | 24.8 |
| | 982 (1800) | 380.6 (55.2) | 260.6 (37.8) | 18.4 |
| | 1038 (1900) | 239.2 (34.7) | 174.4 (25.3) | 23.2 |
| **Alloy C** | 20 (68) | 1159.0 (168.1) | 1008.0 (146.2) | 12.4 |
| | 982 | 315.8 | 215.1 | 22.1 |
| | (1800) | (45.8) | (31.2) | |
| | 1038 (1900) | 201.3 (29.2) | 124.4 (19.5) | 27.9 |

| | | | | |
|---|---|---|---|---|
| Note: UTS - Ultimate Tensile Strength, Y.S. - Yield Strength, | | | | |

As follows from Table 3, welded joints of Alloys A, B, and C demonstrated excellent ductility from ambient temperature (20°C (68°F)) to high temperature enabling accommodation of welding stresses by plastic deformation. All samples demonstrated high tensile strength from an ambient temperature up to 982°C (1800°F) due to precipitation of 47 - 49 vol. % of gamma prime (y') phase shown in Figure 4 in the ductile high strength matrix constituting the solid solution of Fe, Co, Cr, Mo, W, and Re in nickel. Strength of grain boundaries was enhanced by formation of refractory Ta as well as Cr, Mo, and W based carbides. However, at 1038°C (1900°F) cobalt reducing high temperature strength and increase ductility of welded joints produced from Alloy C. Therefore, Alloys A and B were recommended for 3D AM and repair of turbine engine components that exhibit a combination of high stresses and temperature in service conditions, while Alloy C can be better suited for a repair of non-stresses areas of turbine engine components.

It should be obvious that discussed embodiments are considered to be illustrative and not restrictive. Therefore, certain adaptations and modifications of the described embodiments can be made. Also, provided examples do not limit applications of the invented materials as well manufacturing of other embodiments strictly for a repair of turbine engine components and 3D AM.

## Claims

1. **A high** gamma prime (y') nickel based welding material for repair and 3D additive manufacturing of turbine engine components, comprising by wt. %:
- Chromium from 9.0 to 11.0 %,
- Cobalt from 16.0 to 24.0 %,
- Molybdenum from 1.0 to 1.4 %,
- Tungsten from 5.0 to 5.8 %,
- Tantalum from 1.5 to 1.9 %,
- Aluminum from 4.5 to 5.5 %,
- Rhenium from 1.5 to 2.5 %,
- Iron from 0.2 to 0.8 %,
- Hafnium from 0.1 to 0.3 %,
- Boron from 0.005 to 0.02 %,
- Carbon from 0.05 to 0.12 %, and
- Nickel with impurities to balance.

2. The high gamma prime (y') nickel based welding material for repair and 3D additive manufacturing of turbine engine components according to claim 1, comprising by wt. %:
- Chromium from 9.0 to 11.0 %,
- Cobalt from 16.0 to 18.0 %,
- Molybdenum from 1.0 to 1.4 %,
- Tungsten from 5.0 to 5.8 %,
- Tantalum from 1.5 to 1.6 %,
- Aluminum from 4.5 to 5.5 %,
- Rhenium from 1.5 to 2.5 %,
- Iron from 0.2 to 0.8 %,
- Hafnium from 0.1 to 0.3 %,
- Boron from 0.005 to 0.02 %,
- Carbon from 0.05 to 0.12 %, and
- Nickel with impurities to balance.

3. The high gamma prime (y') nickel based welding material for repair and 3D additive manufacturing of turbine engine components, according to claim 1, comprising by wt. %:
- Chromium from 9.0 to 11.0 %,
- Cobalt from 19.0 to 21.0 %,
- Molybdenum from 1.0 to 1.4 %,
- Tungsten from 5.0 to 5.8 %,
- Tantalum from 1.6 to 1.7 %,
- Aluminum from 4.5 to 5.5 %,
- Rhenium from 1.5 to 2.5 %,
- Iron from 0.2 to 0.8 %,
- Hafnium from 0.1 to 0.3 %,
- Boron from 0.005 to 0.02 %,
- Carbon from 0.05 to 0.12 %, and
Nickel with impurities to balance

4. The high gamma prime (y') nickel based welding material for repair and 3D additive manufacturing of turbine engine components, according to claim 1, comprising by wt. %:
- Chromium from 9.0 to 11.0 %,
- Cobalt from 22.0 to 24.0 %,
- Molybdenum from 1.0 to 1.4 %,
- Tungsten from 5.0 to 5.8 %,
- Tantalum from 1.8 to 1.9 %,
- Aluminum from 4.5 to 5.5 %,
- Rhenium from 1.5 to 2.5 %,
- Iron from 0.2 to 0.8 %,
- Hafnium from 0.1 to 0.3 %,
- Boron from 0.005 to 0.02 %,
- Carbon from 0.05 to 0.12 %, and
- Nickel with impurities to balance

5. The high gamma prime (y') nickel based welding material for repair and 3D additive manufacturing of turbine engine components, according to claim 1, wherein the high gamma prime (y') nickel based welding material is a welding powder, a welding wire, an article manufactured by the 3D additive manufacturing, or a repair section of a turbine engine component.

6. The high gamma prime (y') nickel based welding material for repair and 3D additive manufacturing of turbine engine components, according to claim 2, wherein the high gamma prime (y') nickel based welding material is a welding powder, a welding wire, an article manufactured by the 3D additive manufacturing, or a repair section of a turbine engine component.

7. The high gamma prime (y') nickel based welding material for repair and 3D additive manufacturing of turbine engine components, according to claim 3, wherein the high gamma prime (y') nickel based welding material is a welding powder, a welding wire, an article manufactured by the 3D additive manufacturing, or a repair section of a turbine engine component.

8. The high gamma prime (y') nickel based welding material for repair and 3D additive manufacturing of turbine engine components, according to claim 4, wherein the high gamma prime (y') nickel based welding material is a welding powder, a welding wire, an article manufactured by the 3D additive manufacturing, or a repair section of a turbine engine component.

## Patentansprüche

1. Ein Schweißmaterial auf Nickelbasis mit hoher Gammastrahlung (γ') für die Reparatur und die 3D additive Herstellung von Komponenten für Turbinenmotoren, umfassend in Gewichts-%:
- Chrom zwischen 9,0 und 11,0 %,
- Kobalt zwischen 16,0 und 24,0 %,
- Molybdän zwischen 1,0 und 1,4 %,
- Wolfram zwischen 5,0 und 5,8%,
- Tantal zwischen 1,5 und 1,9%,
- Aluminium zwischen 4,5 und 5,5%,
- Rhenium zwischen 1,5 und 2,5%,
- Eisen zwischen 0,2 und 0,8%,
- Hafnium zwischen 0,1 und 0,3%,
- Bor zwischen 0,005 und 0,02%,
- Carbon zwischen 0,05 und 0,12%, und Nickel mit Unreinheiten zum Ausbalancieren.

2. Das Schweißmaterial auf Nickelbasis mit hoher Gammastrahlung (γ') für die Reparatur und die 3D additive Herstellung von Komponenten für Turbinenmotoren nach Anspruch 1, umfassend in Gewichts-%:
- Chrom zwischen 9,0 und 11,0 %,
- Kobalt zwischen 16,0 und 18,0 %,
- Molybdän zwischen 1,0 und 1,4 %,
- Wolfram zwischen 5,0 und 5,8%,
- Tantal zwischen 1,5 und 1,6%,
- Aluminium zwischen 4,5 und 5,5%,
- Rhenium zwischen 1,5 und 2,5%,
- Eisen zwischen 0,2 und 0,8%,
- Hafnium zwischen 0,1 und 0,3%,
- Bor zwischen 0,005 und 0,02%,
- Carbon zwischen 0,05 und 0,12%, und
- Nickel mit Unreinheiten zum Ausbalancieren.

3. Das Schweißmaterial auf Nickelbasis mit hoher Gammastrahlung (γ') für die Reparatur und die 3D additive Herstellung von Komponenten für Turbinenmotoren nach Anspruch 1, umfassend in Gewichts-%:
- Chrom zwischen 9,0 und 11,0 %,
- Kobalt zwischen 19,0 und 21,0 %,
- Molybdän zwischen 1,0 und 1,4 %,
- Wolfram zwischen 5,0 und 5,8%,
- Tantal zwischen 1,6 und 1,7%,
- Aluminium zwischen 4,5 und 5,5%,
- Rhenium zwischen 1,5 und 2,5%,
- Eisen zwischen 0,2 und 0,8%,
- Hafnium zwischen 0,1 und 0,3%,
- Bor zwischen 0,005 und 0,02%,
- Carbon zwischen 0,05 und 0,12%, und
Nickel mit Unreinheiten zum Ausbalancieren.

4. Das Schweißmaterial auf Nickelbasis mit hoher Gammastrahlung (γ') für die Reparatur und die 3D additive Herstellung von Komponenten für Turbinenmotoren nach Anspruch 1, umfassend in Gewichts-%:
- Chrom zwischen 9,0 und 11,0 %,
- Kobalt zwischen 22,0 und 24,0 %,
- Molybdän zwischen 1,0 und 1,4 %,
- Wolfram zwischen 5,0 und 5,8%,
- Tantal zwischen 1,8 und 1,9%,
- Aluminium zwischen 4,5 und 5,5%,
- Rhenium zwischen 1,5 und 2,5%,
- Eisen zwischen 0,2 und 0,8%,
- Hafnium zwischen 0,1 und 0,3%,
- Bor zwischen 0,005 und 0,02%,
- Carbon zwischen 0,05 und 0,12%, und
- Nickel mit Unreinheiten zum Ausbalancieren.

5. Das Schweißmaterial auf Nickelbasis mit hoher Gammastrahlung (γ') für die Reparatur und die 3D additive Herstellung von Komponenten für Turbinenmotoren nach Anspruch 1, wobei das Schweißmaterial auf Nickelbasis mit hoher Gammastrahlung (γ') ein Schweißpuder, ein Schweißdraht, ein Artikel, der durch die 3D additive Herstellung hergestellt wird oder ein Reparaturabschnitt einer Turbinenmotorkomponente ist.

6. Das Schweißmaterial auf Nickelbasis mit hoher Gammastrahlung (γ') für die Reparatur und die 3D additive Herstellung von Komponenten für Turbinenmotoren nach Anspruch 2, wobei das Schweißmaterial auf Nickelbasis mit hoher Gammastrahlung (γ') ein Schweißpuder, ein Schweißdraht, ein Artikel, der durch die 3D additive Herstellung hergestellt wird oder ein Reparaturabschnitt einer Turbinenmotorkomponente ist.

7. Das Schweißmaterial auf Nickelbasis mit hoher Gammastrahlung (γ') für die Reparatur und die 3D additive Herstellung von Komponenten für Turbinenmotoren nach Anspruch 3, wobei das Schweißmaterial auf Nickelbasis mit hoher Gammastrahlung (γ') ein Schweißpuder, ein Schweißdraht, ein Artikel, der durch die 3D additive Herstellung hergestellt wird oder ein Reparaturabschnitt einer Turbinenmotorkomponente ist.

8. Das Schweißmaterial auf Nickelbasis mit hoher Gammastrahlung (γ') für die Reparatur und die 3D additive Herstellung von Komponenten für Turbinenmotoren nach Anspruch 4, wobei das Schweißmaterial auf Nickelbasis mit hoher Gammastrahlung (γ') ein Schweißpuder, ein Schweißdraht, ein Artikel, der durch die 3D additive Herstellung hergestellt wird oder ein Reparaturabschnitt einer Turbinenmotorkomponente ist.

## Revendications

1. Matériau de soudage à base de nickel à haute teneur en phase gamma prime (γ') pour la réparation et la fabrication additive 3D de composants de moteur à turbine, comprenant en % en poids :
- chrome de 9,0 à 11,0 %,
- cobalt de 16,0 à 24,0 %,
- molybdène de 1,0 à 1,4 %,
- tungstène de 5,0 à 5,8 %,
- tantale de 1,5 à 1,9 %,
- aluminium de 4,5 à 5,5 %,
- rhénium de 1,5 à 2,5 %,
- fer de 0,2 à 0,8 %,
- hafnium de 0,1 à 0,3 %,
- bore de 0,005 à 0,02 %,
- carbone de 0,05 à 0,12 %, et
- nickel avec impuretés jusqu'à équilibre.

2. Matériau de soudage à base de nickel à haute teneur en phase gamma prime (γ') pour la réparation et la fabrication additive 3D de composants de moteur à turbine selon la revendication 1, comprenant en % en poids :
- chrome de 9,0 à 11,0 %,
- cobalt de 16,0 à 18,0 %,
- molybdène de 1,0 à 1,4 %,
- tungstène de 5,0 à 5,8 %,
- tantale de 1,5 à 1,6 %,
- aluminium de 4,5 à 5,5 %,
- rhénium de 1,5 à 2,5 %,
- fer de 0,2 à 0,8 %,
- hafnium de 0,1 à 0,3 %,
- bore de 0,005 à 0,02 %,
- carbone de 0,05 à 0,12 %, et
- nickel avec des impuretés jusqu'à équilibre.

3. Matériau de soudage à base de nickel à haute teneur en phase gamma prime (γ') pour la réparation et la fabrication additive 3D de composants de moteur à turbine, selon la revendication 1, comprenant en % en poids :
- chrome de 9,0 à 11,0 %,
- cobalt de 19,0 à 21,0 %,
- molybdène de 1,0 à 1,4 %,
- tungstène de 5,0 à 5,8 %,
- tantale de 1,6 à 1,7 %,
- aluminium de 4,5 à 5,5 %,
- rhénium de 1,5 à 2,5 %,
- fer de 0,2 à 0,8 %,
- hafnium de 0,1 à 0,3 %,
- bore de 0,005 à 0,02 %,
- carbone de 0,05 à 0,12 %, et
nickel avec des impuretés jusqu'à équilibre.

4. Matériau de soudage à base de nickel à haute teneur en phase gamma prime (γ') pour la réparation et la fabrication additive 3D de composants de moteur à turbine, selon la revendication 1, comprenant en % en poids :
- chrome de 9,0 à 11,0 %,
- cobalt de 22,0 à 24,0 %,
- molybdène de 1,0 à 1,4 %,
- tungstène de 5,0 à 5,8 %,
- tantale de 1,8 à 1,9 %,
- aluminium de 4,5 à 5,5 %,
- rhénium de 1,5 à 2,5 %,
- fer de 0,2 à 0,8 %,
- hafnium de 0,1 à 0,3 %,
- bore de 0,005 à 0,02 %,
- carbone de 0,05 à 0,12 %, et
- nickel avec des impuretés jusqu'à équilibre.

5. Matériau de soudage à base de nickel à haute teneur en phase gamma prime (γ') pour la réparation et la fabrication additive 3D de composants de moteur à turbine, selon la revendication 1, dans lequel le matériau de soudage à base de nickel à haute teneur en phase gamma prime (y') est une poudre de soudage, un fil de soudage, un article fabriqué par fabrication additive 3D, ou une section de réparation d'un composant de moteur à turbine.

6. Matériau de soudage à base de nickel à haute teneur en phase gamma prime (γ') pour la réparation et la fabrication additive 3D de composants de moteur à turbine, selon la revendication 2, dans lequel le matériau de soudage à base de nickel à haute teneur en phase gamma prime (y') est une poudre de soudage, un fil de soudage, un article fabriqué par fabrication additive 3D, ou une section de réparation d'un composant de moteur à turbine.

7. Matériau de soudage à base de nickel à haute teneur en phase gamma prime (γ') pour la réparation et la fabrication additive 3D de composants de moteur à turbine, selon la revendication 3, dans lequel le matériau de soudage à base de nickel à haute teneur en phase gamma prime (y') est une poudre de soudage, un fil de soudage, un article fabriqué par fabrication additive 3D, ou une section de réparation d'un composant de moteur à turbine.

8. Matériau de soudage à base de nickel à haute teneur en phase gamma prime (γ') pour la réparation et la fabrication additive 3D de composants de moteur à turbine, selon la revendication 4, dans lequel le matériau de soudage à base de nickel à haute teneur en phase gamma prime (y') est une poudre de soudage, un fil de soudage, un article fabriqué par fabrication additive 3D, ou une section de réparation d'un composant de moteur à turbine.
